# EUROPÄISCHE PATENTSCHRIFT

(11) **EP 2 942 131 B1**
(45) Veröffentlichungstag und Bekanntmachung des Hinweises auf die Patenterteilung: **24.07.2019**
(21) Anmeldenummer: 15166295.4
(22) Anmeldetag: 04.05.2015
(51) Int. Cl.: B22F 3/105, B22F 5/04, B22F 3/115, C23C 4/12, F01D 11/12

(54) **DICHTUNG, VERFAHREN ZUR HERSTELLUNG EINER DICHTUNG UND STRÖMUNGSMASCHINE**
SEAL, METHOD FOR PRODUCING A GASKET AND FLOW ENGINE
JOINT, PROCÉDÉ DE FABRICATION D'UN JOINT ET TURBOMACHINE

(30) Priorität: 09.05.2014 DE 102014208801
(43) Veröffentlichungstag der Anmeldung: 11.11.2015
(73) Patentinhaber: MTU Aero Engines AG, 80995 München (DE)
(72) Erfinder: Wulf, Joachim, 80634 München (DE)

(56) Entgegenhaltungen:
- WO-A1-2012/072384
- DE-A1-102007 031 404

## Beschreibung

Die Erfindung betrifft eine Dichtung gemäß dem Oberbegriff des Anspruchs 1 sowie ein Verfahren zur Herstellung einer Dichtung gemäß dem Oberbegriff des Anspruchs 8.

Dichtungen, insbesondere in Form von Wabendichtungen, kommen insbesondere bei so genannten Spalterhaltungssystemen in den Verdichter- und Turbinenkomponenten von Strömungsmaschinen zur Anwendung. Dabei haben die Dichtungen die Aufgabe, einen Dichtspalt von rotierender Beschaufelung zu einem Gehäuse als auch die Spalte von einer stehenden Beschaufelung zu den drehenden Rotornaben minimal zu halten und damit ein stabiles Betriebsverhalten der Strömungsmaschine bei hohem Wirkungsgrad zu garantieren. Üblicherweise umfassen die rotierenden Bauteile der Turbine Dichtfinnen, die in bekannter Weise gegen die Dichtungen einlaufen. Eine derartige wabenförmige Dichtung ist durch die WO 2004/061340 A1 offenbart. Es ist bekannt, Wabendichtungen mit den entsprechenden Verdichter- oder Turbinenkomponeten mittels mechanischer Befestigungsmittel, mittels Löten, Schweißen oder Laserschweißen zu verbinden. Des Weiteren ist aus der EP 1 573 239 B1 oder der EP 2 620 598 A2 bekannt, die Wabendichtungen mittels generativer Herstellungsverfahren oder thermischer Spritzverfahren herzustellen und/oder direkt auf die Verdichter- oder Turbinenkomponeten aufzubringen.

Aus der WO 2012/072384 A1 ist eine Dichtstruktur bekannt, deren Wände in axialer Richtung einem betriebsbedingten Druckabfall in einer Strömungsmaschine entgegengerichtet bezüglich der radialen Richtung geneigt sind.

Die DE 10 2007 031 404 A1 offenbart eine mittels Metallpulverspritzgießen hergestellte Wabenstruktur, die nach einem definierten Perforationsmuster mit Löchern versehen ist.

Als nachteilig an den bekannten, mittels generativer oder additiver Verfahren hergestellter Dichtungen, insbesondere Wabendichtungen, ist jedoch, dass diese mit einer durch die Verfahrensparameter vorgegebenen Mindestwandstärke aufgebaut werden müssen. Diese Mindestwandstärke ist aber dicker als die konventionell hergestellten Wabendichtungen aus Blech, was zu einem schlechteren Einlaufverhalten führt. Dieses äußert sich beispielsweise in einer höheren thermischen und mechanischen Belastung der Dichtfinnen an Rotoren, Dichtringen und Laufschaufeln beim Einlaufen in generativ oder additiv hergestellte Wabendichtungen.

Aufgabe der vorliegenden Erfindung ist es daher, eine Dichtung der eingangs genannten Art bereitzustellen, die ein verbessertes Einlaufverhalten gewährleistet. Des Weiteren ist es Aufgabe der vorliegenden Erfindung, ein Verfahren zur Herstellung einer derartigen Dichtung sowie eine Strömungsmaschine mit verbessertem Wirkungsgrad bereitzustellen.

Diese Aufgaben werden erfindungsgemäß durch eine Dichtung mit den Merkmalen des Patentanspruchs 1, durch ein Verfahren zur Herstellung einer Dichtung mit den Merkmalen des Patentanspruchs 7 sowie einer Strömungsmaschine mit den Merkmalen des Patentanspruchs 13 gelöst.

Vorteilhafte Ausgestaltungen mit zweckmäßigen Weiterbildungen der Erfindung sind in den jeweiligen Unteransprüchen angegeben, wobei vorteilhafte Ausgestaltungen der Dichtung als vorteilhafte Ausgestaltungen des Verfahrens oder der Strömungsmaschine und umgekehrt anzusehen sind.

Ein erster Aspekt der Erfindung betrifft eine Dichtung zur Abdichtung eines Spalts zwischen einem feststehenden Bauteil und einem bewegten Bauteil, insbesondere zur Abdichtung eines radialen Spalts zwischen einem Rotor und einem Stator einer Strömungsmaschine, umfassend mindestens ein Dichtungssegment mit einer dem Spalt zugewandten Randzone, wobei die Dichtung schichtweise durch ein freiformendes Verfahren, insbesondere einem generativen oder additiven Verfahren, hergestellt ist. In der Randzone des Dichtungssegments sind dabei eine Vielzahl von vordefinierten Schwächungsbereichen ausgebildet. Durch die gezielte Schwächung der Dichtungssegmente in der Randzone während der schichtweisen Herstellung durch ein freiformendes Verfahren, wird das Einlaufverhalten der erfindungsgemäßen Dichtungen deutlich verbessert. Durch die Ausbildung der Schwächungsbereiche in der Randzone des Dichtungssegments bzw. der entsprechenden Dichtung, ergibt sich eine geringere thermische und mechanische Belastung der Dichtfinnen an Rotoren, Dichtringen und Laufschaufeln beim Einlaufen in die erfindungsgemäße Dichtung. Dabei entspricht die Randzone dem Einlaufbereich des Dichtungssegments bzw. der Dichtung vollständig oder zumindest teilweise. Sie kann beispielsweise auch größer als der Einlaufbereich ausgebildet sein. Des Weiteren wird durch die erfindungsgemäße Dichtung vermieden, dass es zu sogenannten Aufschmierungen an der Dichtung oder den Dichtfinnen kommt, wobei insbesondere Aufschmierungen an den Dichtfinnen zu einem vertieften Einrieb in die Dichtung führen kann. Schließlich wird auch das Risiko der Freisetzung größerer Partikel von Aufschmierungen durch die Vielzahl von vordefinierten Schwächungsbereichen in der Randzone des Dichtungssegments bzw. der Dichtung reduziert. Die erfindungsgemäße Dichtung sind so genannte Wabendichtung, die Dichtungssegmente als so genannte Wabensegmente ausgebildet sein. Dabei können die Wabensegmente unterschiedliche Wabengeometrien aufweisen.

In weiteren vorteilhaften Ausgestaltungen der erfindungsgemäßen Dichtung sind die Schwächungsbereiche in einer oder mehreren Ebenen, die in etwa parallel zu einem dem Spalt zugewandten Rand des Dichtungssegments verlaufen, angeordnet. Dadurch ergibt sich eine insbesondere gleichmäßige Schwächung der Randzone, wodurch wiederum ein verbessertes Einlaufverhalten gewährleistet ist. Zudem besteht die Möglichkeit, dass die Vielzahl an Schwächungsbereichen eine Schwächungszone ausbilden, wobei die Schwächungszone wiederum derart ausgebildet ist, dass sich eine gleichmäßige und/oder ungleichmäßige Schwächung der Randzone in axialer und/oder radialer Erstreckung des Dichtungssegments und/oder der Dichtung ergibt. Durch die Vielzahl an Gestaltungsmöglichkeiten der Schwächungszone ist es vorteilhafterweise möglich, diese bzw. das Dichtungssegment und die entsprechende Dichtung an die vorgegebenen Dichtparameter individuell anzupassen. Das Einlaufverhalten der erfindungsgemäßen Dichtung kann somit den vorgegebenen Parametern bzw. Anforderungen ohne Weiteres angepasst werden.

In weiteren vorteilhaften Ausgestaltungen der erfindungsgemäßen Dichtung sind die Schwächungsbereiche linear und/oder punktförmig und/oder kreisförmig und/oder kreisbogenförmig ausgebildet. Aber auch andere Formen der Schwächungsbereiche sind ohne Weiteres denkbar und einsetzbar. Die Schwächungsbereiche sind in Wabenwänden des Dichtungssegments nicht-durchgehend ausgebildet. Des Weiteren besteht die Möglichkeit, dass der radiale Abstand der Schwächungsbereiche zueinander mindestens der Dicke einer Bauteilschicht der Dichtung entspricht. Schließlich ist auch die Form und/oder die Größe und/oder die Länger und/oder die Häufigkeit der Schwächungsbereiche in der Randzone konstant oder variabel. Es wird deutlich, dass über die Vielzahl an Variationsmöglichkeiten bezüglich der Ausgestaltung und Anordnung der Schwächungsbereiche in der Randzone des Dichtungssegmentes bzw. der Dichtung eine optimierte Einstellung des Einlaufverhaltens des Dichtungssegments bzw. der Dichtung möglich ist.

Ein zweiter Aspekt der vorliegenden Erfindung betrifft ein Verfahren zur Herstellung einer Dichtung zur Abdichtung eines Spalts zwischen einem feststehenden Bauteil und einem bewegten Bauteil, insbesondere zur Abdichtung eines radialen Spalts zwischen einem Rotor und einem Stator einer Strömungsmaschine, wobei die Dichtung mindestens ein Dichtungssegment mit einer dem Spalt zugewandten Randzone aufweist und die Dichtung durch ein freiformendes Verfahren, insbesondere einem generativen oder additiven Verfahren, schichtweise hergestellt wird. Während der Herstellung der Randzone, welche ein Einlaufbereich des Dichtungssegments ist, werden dabei eine Vielzahl von Schwächungsbereichen durch eine Variation, insbesondere eine Verringerung und/oder eine Unterbrechung eines thermischen und/oder kinetischen Energieeintrags in mindestens eine Werkstoffschicht zur Ausbildung einer Bauteilschicht der Dichtung ausgebildet. Das erfindungsgemäße Verfahren gewährleistet eine einfache und sichere Ausbildung von vordefinierten Schwächungsbereichen in der Randzone des Dichtungssegments bzw. der Dichtung, die auch den Einlaufbereich des Dichtungssegments bzw. der Dichtung umfasst. Durch die Ausbildung der Vielzahl an Schwächebereichen verbessert sich das Einlaufverhalten der mittels freiformender Verfahren, insbesondere generativer oder additiver Verfahren, schichtweise hergestellten Dichtungen signifikant. Unter Variation des thermischen und/oder kinetischen Energieeintrags wird dabei verstanden, dass der Energieeintrag kleiner als 100 % der zum Verschmelzen und/oder Versintem einzelner Werkstoffpartikel miteinander benötigten Energiemenge, unterschritten wird. Der Energieeintrag kann bis auf 0 % verringert werden, so dass in diesem Fall eine Unterbrechung des Energieeintrags erfolgt. Durch die Variation und/oder Unterbrechung des thermischen und/oder kinetischen Energieeintrags ist die relative Schwächung der jeweiligen Schwächungsbereiche gegenüber normal verbundenen, d.h. verschmolzenen und/oder versinterten Bereichen der Randzone einstellbar. Die Dichtung kann als so genannte Wabendichtung, die Dichtungssegmente als so genannte Wabensegmente ausgebildet sein. Dabei können die Wabensegmente unterschiedliche Wabengeometrien aufweisen.

In einer vorteilhaften Ausgestaltung des erfindungsgemäßen Verfahrens ist das freiformende Verfahren ein generatives Verfahren und umfasst zumindest folgende Schritte:
a) Schichtweises Auftragen von mindestens einem pulverförmigen Werkstoff auf mindestens eine Bauteilplattform im Bereich einer Aufbau- und Fügezone; und
b) Schichtweises und lokales Verschmelzen und/oder Versintern des Werkstoffs durch Zuführen von Energie mittels wenigstens eines Hochenergiestrahls im Bereich der Aufbau- und Fügezone zum Ausbilden einer Bauteilschicht der Dichtung, wobei während der Herstellung der Randzone in vorbestimmten Bauteilschichten der Dichtung die Variation, insbesondere die Verringerung der Energieleistung des Hochenergiestrahls und/oder die Unterbrechung des Hochenergiestrahls zur Ausbildung der Schwächungsbereiche erfolgt.

Die Unterbrechung des Hochenergiestrahls kann beispielsweise sequenziell linear oder flächenhaft erfolgen. Dabei können netz- oder gitterförmige Schwächungsbereiche entstehen. Das Schwächen der Schichtanbindung kann aber auch durch wiederholte lokale Variation der Energieleistung des Hochenergiestrahls bei der Belichtung des pulverförmigen Werkstoffs erfolgen. Bei dem Hochenergiestrahl kann es sich dabei um einen Laser- oder Elektronenstrahl handeln. Ein derartiges erfindungsgemäßes Verfahren ermöglicht den relativ einfachen generativen Aufbau einer Dichtung mit verbessertem Einlaufverhalten.

In weiteren vorteilhaften Ausgestaltungen des erfindungsgemäßen Verfahrens ist das frei formende Verfahren ein Hochgeschwindigkeits-Flammspritzverfahren oder ein Kaltgasspritzverfahren, wobei während der Herstellung der Randzone in vorbestimmten Bauteilschichten der Dichtung die Variation, insbesondere die Verringerung des Energieeintrags durch eine Verringerung einer Partikelgeschwindigkeit eines pulverförmigen Werkstoffs zur Ausbildung der Bauteilschicht und/oder die Unterbrechung des Partikelauftrags zur Ausbildung der Schwächungsbereiche erfolgt. Unter Variation, insbesondere der Verringerung des Energieeintrags wird dabei eine Verringerung der Partikelgeschwindigkeit gegenüber einer für das Anhaften der Werkstoffpartikel aneinander notwendigen Mindestgeschwindigkeit verstanden. Des Weiteren besteht die Möglichkeit, dass das freiformende Verfahren ein Auftragschweißverfahren, insbesondere ein Laser-Pulver-Auftragschweißverfahren oder ein Elektronenstrahlschweißverfahren ist. Auch andere generative oder additive Herstellungsverfahren sind denkbar. Durch die erfindungsgemäßen Verfahren ist es möglich, Dichtungen mit verbesserten Einlaufverhalten einfach und schnell herzustellen.

Ein dritter Aspekt betrifft eine Strömungsmaschine, insbesondere eine Gasturbine, wobei diese mindestens eine Dichtung der im Vorhergehenden beschriebenen Art umfasst. Die erfindungsgemäße Strömungsmaschine weist auf Grund der Dichtungen mit verbesserten Einlaufverhalten ein stabileres Betriebsverhalten auf und garantiert einen hohen Wirkungsgrad.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematische Darstellung einer erfindungsgemäßen Dichtung;
- Fig. 2: eine schematische Darstellung eines Teilbereichs einer erfindungsgemäßen Dichtung gemäß einer weiteren Ausführungsform;
- Fig. 3: eine schematische Darstellung einer erfindungsgemäßen Dichtung gemäß einer weiteren Ausführungsform;
- Fig. 4: eine schematische Darstellung einer erfindungsgemäßen Dichtung gemäß einer weiteren Ausführungsform; und
- Fig. 5: eine schematische Darstellung einer erfindungsgemäßen Dichtung gemäß einer weiteren Ausführungsform.

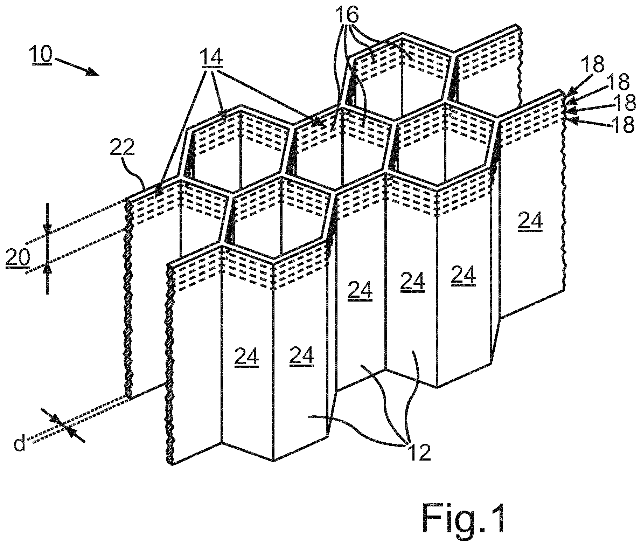

Fig. 1 zeigt eine schematische Darstellung einer Dichtung 10 zur Abdichtung eines Spalts zwischen einem feststehenden Bauteil und einem bewegten Bauteil, insbesondere zur Abdichtung eines radialen Spalts zwischen einem Rotor und einem Stator einer Strömungsmaschine. Die Dichtung 10 umfasst mehrere Dichtungssegmente 12, die jeweils eine dem abzudichtenden Spalt (nicht dargestellt) zugewandte Randzone 14 aufweisen. In dem dargestellten Ausführungsbeispiel ist die Dichtung 10 als so genannte Wabendichtung dargestellt. Die Dichtungssegmente 12 bilden dabei Wabensegmente aus. Diese Wabensegmente sind in dem Ausführungsbeispiel mit einer sechseckigen Wabengeometrie dargestellt. Es ist aber auch möglich, dass diese einen andere Wabengeometrie aufweisen. Die Dichtung 10 ist schichtweise durch ein freiformendes Verfahren, insbesondere ein generatives oder additives Verfahren hergestellt.

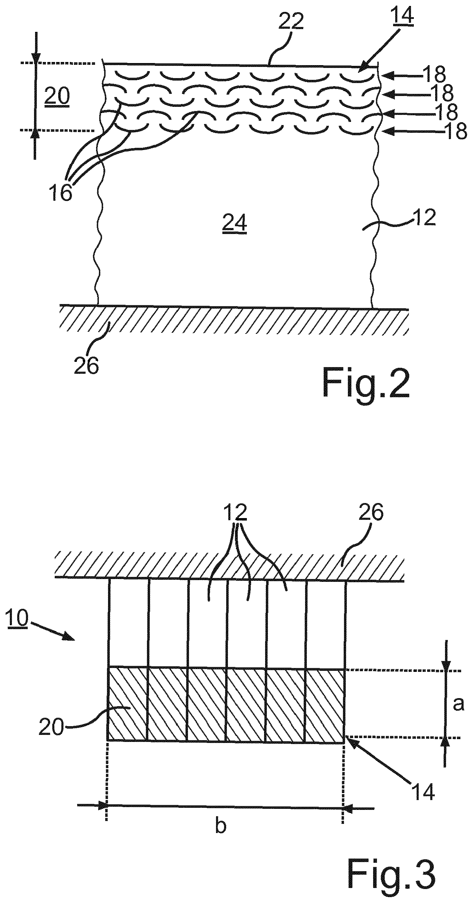

Die Randzone 14 umfasst zudem den sogenannten Einlaufbereich der Dichtung 10 bzw. der einzelnen Dichtungssegmente 12. Man erkennt, dass in den Randzonen 14 der Dichtungssegmente 12 eine Vielzahl von vordefinierten Schwächungsbereichen 16 ausgebildet sind. Die Schwächungsbereiche 16 sind dabei in mehreren Ebenen 18, die in etwa parallel zu einem dem abzudichtenden Spalt zugewandten Rand 22 des Dichtungssegments 12 verlaufen, angeordnet. In dem dargestellten Ausführungsbeispiel sind die Schwächungsbereiche 16 linear ausgebildet, d.h. sie bilden eine lineare Schwächung der Wandquerschnitte der Dichtungssegmente 12. Zudem sind die Schwächungsbereiche 16 in den Wabenwänden 24 des Dichtungssegments 12 durchgehend ausgebildet. Die Wandstärke d der Wabenwände 24 richtet sich nach der notwendigen Minimalwandstärke des verwendeten Herstellungsverfahrens. Für unterschiedliche generative oder additive Herstellverfahren ergeben sich unterschiedliche Minimalwandstärken, die durch die Verfahrensparameter vorgegeben sind. Die einzelnen Schwächungsbereiche 16 werden dabei durch eine Variation, insbesondere eine Verringerung und/oder eine Unterbrechung eines thermischen und/oder kinetischen Energieeintrags während der Ausführung des freiformenden Verfahrens in mindestens einer Werkstoffschicht zur Ausbildung einer einzelnen Bauteilschicht der Dichtung 10 bzw. der Dichtungssegmente 12 ausgebildet. Des Weiteren erkennt man, dass die Vielzahl an Schwächungsbereichen 16 insgesamt eine Schwächungszone 20 ausbilden, wobei die Schwächungszone 20 in dem dargestellten Ausführungsbeispiel derart ausgebildet ist, dass sich eine gleichmäßige Schwächung der Randzone 14 in axialer und radialer Erstreckung des Dichtungssegments 12 und der entsprechenden Dichtung 10 ergibt (vgl. auch Fig. 3). In dem dargestellten Ausführungsbeispiel sind die Schwächungsbereiche 16 als lineare Ausnehmungen in den Wabenwänden 24 ausgebildet. Es ist aber auch möglich, dass die Schwächungsbereiche 16 punktförmig und/oder kreisförmig und/oder kreisbogenförmig ausgebildet sind. Auch andere Formen sind denkbar. Zudem kann die Form und/oder die Größe und/oder die Länge und/oder die Häufigkeit der Schwächungsbereiche 16 in der Randzone 14 konstant oder variabel ausgebildet sein. Der radiale Abstand der Schwächungsbereiche 16 zueinander beträgt dabei mindestens die Dicke einer Bauteilschicht der Dichtung 10.

Fig. 2 zeigt eine schematische Darstellung eines Teilbereichs einer erfindungsgemäßen Dichtung 10 gemäß einer weiteren Ausführungsform. Man erkennt, dass wiederum eine Vielzahl an Schwächungsbereichen 16 in mehreren Ebenen 18 ungefähr parallel zu dem Rand 22 des Dichtungssegments 12 angeordnet sind. Dabei sind die einzelnen Schwächungsbereiche 16 kreisbogenförmig ausgebildet und bilden durchgehende Öffnungen in der Wabenwand 24. Zudem sind die kreisbogenförmigen Schwächungsbereiche 16 von einer Ebene 18 zu einer darunter liegenden Ebene 18 alternierend konkav oder konvex angeordnet. Insgesamt bilden die Vielzahl an Schwächungsbereichen 16 wiederum die Schwächungszone 20 aus, die in diesem Ausführungsbeispiel eine gleichmäßige Schwächung der Randzone 14 in axialer und radialer Erstreckung des Dichtungssegments 12 nach sich ziehen.

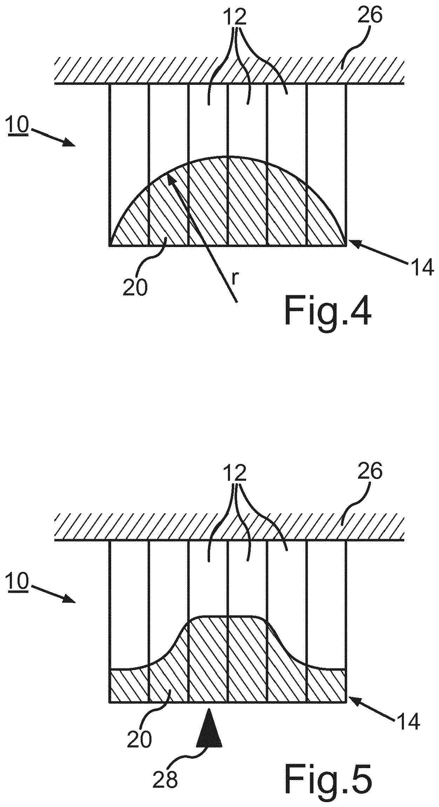

Fig. 3 zeigt eine schematische Darstellung einer Dichtung 10 gemäß einer weiteren Ausführungsform. Man erkennt, dass die Dichtung 10 aus mehreren Dichtungssegmenten 12 besteht, die wiederum entsprechende Randzonen 14 aufweisen, welche insgesamt eine Randzone der Dichtung 10 ausbilden. Man erkennt, dass die aus einer Vielzahl von Schwächungsbereichen 16 (nicht dargestellt) bestehende Schwächungszone 20, die wiederum den Einlaufbereich der Dichtung 10 umfasst, derart ausgebildet ist, dass sich eine gleichmäßige Schwächung des Wabenpakets über die gesamte axiale Erstreckung a und eine gleichmäßige Schwächung in radialer Richtung b ergibt. Des Weiteren erkennt man, dass die Dichtung 10 an einem Substrat 26 angeordnet ist. Dabei besteht die Möglichkeit, dass die Dichtung 10 einstückig, d.h. mittels eines freiformenden Verfahrens mit dem Substrat 26 einstückig hergestellt und verbunden ist. Es ist aber auch möglich, dass die Dichtung 10 mit dem Substrat 26 über eine mechanische Verbindung, durch ein Anlöten oder andere Befestigungsmechanismen verbunden ist. Entsprechendes gilt auch für die in den Figuren 4 und 5 dargestellten Dichtungen 10.

Fig. 4 zeigt eine schematische Darstellung einer Dichtung 10 gemäß einer weiteren Ausführungsform. Man erkennt, dass die aus einer Vielzahl von Schwächungsbereichen 16 (nicht dargestellt) bestehende Schwächungszone 20 derart ausgebildet ist, dass sich eine Variation des Schwächungsgrads der Schwächungszone 20 in radialer Richtung über die axiale Erstreckung der Dichtung 10 ergibt. In dem dargestellten Ausführungsbeispiel weist die Schwächungszone 20 die Form eines Teilkreises mit einem Radius r auf.

Fig. 5 zeigt eine schematische Darstellung einer Dichtung 10 gemäß einer weiteren Ausführungsform. Die wiederum aus einer Vielzahl von Schwächungsbereichen 16 (nicht dargestellt) bestehende Schwächungszone 20 ist in diesem Ausführungsbeispiel an eine Ortskurve einer Dichtfinne 28 im Betrieb angepasst. Man erkennt wiederum eine Variation des Schwächungsgrads der Schwächungszone 20 in radialer Richtung der Dichtung 10 über ihre axiale Erstreckung.

Die für die Herstellung der beschriebenen Dichtungen 10 verwendeten Materialien, insbesondere die pulverförmigen Werkstoffe bestehen aus Metall, Metalllegierungen, Kunststoff und/oder Keramik. Details zu der Herstellung von Dichtungen mittels freiformender Verfahren und zu den verwendeten Materialien sind aus der einschlägigen Literatur bekannt.

## Patentansprüche

1. Dichtung zur Abdichtung eines Spalts zwischen einem feststehenden Bauteil und einem bewegten Bauteil, insbesondere zur Abdichtung eines radialen Spalts zwischen einem Rotor und einem Stator einer Strömungsmaschine, umfassend mindestens ein Dichtungssegment (12) mit einer dem Spalt zugewandten Randzone (14), wobei die Dichtung (10) schichtweise durch ein freiformendes Verfahren, insbesondere einem generativen oder additiven Verfahren, hergestellt ist, wobei in der Randzone (14) des Dichtungssegments (12) eine Vielzahl von vordefinierten Schwächungsbereichen (16) ausgebildet sind,
**dadurch gekennzeichnet,**
**dass** die Randzone (14) ein Einlaufbereich des Dichtungssegments (12) ist und
**dass** die Schwächungsbereiche (16) in Wabenwänden (24) des Dichtungssegments (12) nicht-durchgehend ausgebildet sind.

2. Dichtung nach Anspruch 1,
**dadurch gekennzeichnet, dass**
die Schwächungsbereiche (16) in einer oder mehreren Ebenen (18), die in etwa parallel zu einem dem Spalt zugewandten Rand (22) des Dichtungssegments (12) verlaufen, angeordnet sind.

3. Dichtung nach einem der vorhergehenden Ansprüche,
**dadurch gekennzeichnet, dass**
die Vielzahl an Schwächungsbereichen (16) eine Schwächungszone (20) ausbilden, wobei
die Schwächungszone (20) derart ausgebildet ist, dass sich eine gleichmäßige und/oder ungleichmäßige Schwächung der Randzone (14) in axialer und/oder radialer Ersteckung des Dichtungssegments (12) und/oder der Dichtung (10) ergibt.

4. Dichtung nach einem der vorhergehenden Ansprüche,
**dadurch gekennzeichnet, dass**
die Schwächungsbereiche (16) linear und/oder punktförmig und/oder kreisförmig und/oder kreisbogenförmig ausgebildet sind.

5. Dichtung nach einem der vorhergehenden Ansprüche,
**dadurch gekennzeichnet, dass**
der radiale Abstand der Schwächungsbereiche (16) zueinander mindestens der Dicke einer Bauteilschicht der Dichtung (10) entspricht.

6. Dichtung nach einem der vorhergehenden Ansprüche,
**dadurch gekennzeichnet, dass**
die Form und/oder die Größe und/oder die Länge und/oder die Häufigkeit der Schwächungsbereiche (16) in der Randzone (14) konstant oder variabel ist.

7. Verfahren zur Herstellung einer Dichtung zur Abdichtung eines Spalts zwischen einem feststehenden Bauteil und einem bewegten Bauteil, insbesondere zur Abdichtung eines radialen Spalts zwischen einem Rotor und einem Stator einer Strömungsmaschine, wobei die Dichtung (10) mindestens ein Dichtungssegment (12) mit einer dem Spalt zugewandten Randzone (14) aufweist und die Dichtung (10) durch ein freiformendes Verfahren, insbesondere einem generativen oder additiven Verfahren, schichtweise hergestellt wird, **dadurch gekennzeichnet, dass**
während der Herstellung der Randzone (14) eine Vielzahl von Schwächungsbereichen (16) durch eine Variation, insbesondere eine Verringerung und/oder eine Unterbrechung eines thermischen und/oder kinetischen Energieeintrags in mindestens eine Werkstoffschicht zur Ausbildung einer Bauteilschicht der Dichtung (10) ausgebildet werden, wobei die Randzone (14) ein Einlaufbereich des Dichtungssegments (12) ist.

8. Verfahren nach Anspruch 7,
**dadurch gekennzeichnet, dass**
das freiformendes Verfahren ein generatives Verfahren ist und zumindest folgende Schritte umfasst:
a) Schichtweises Auftragen von mindestens einem pulverförmigen Werkstoff auf mindestens eine Bauteilplattform im Bereich einer Aufbau- und Fügezone; und
b) Schichtweises und lokales Verschmelzen und/oder Versintem des Werkstoffs durch Zuführen von Energie mittels wenigstens eines Hochenergiestrahls im Bereich der Aufbau- und Fügezone zum Ausbilden einer Bauteilschicht der Dichtung (10), wobei während der Herstellung der Randzone (14) in vorbestimmten Bauteilschichten der Dichtung (10) die Variation, insbesondere die Verringerung der Energieleistung des Hochenergiestrahls und/oder die Unterbrechung des Hochenergiestrahls zur Ausbildung der Schwächungsbereiche (16) erfolgt.

9. Verfahren nach Anspruch 8,
**dadurch gekennzeichnet, dass**
die Unterbrechung des Hochenergiestrahls sequentiell linear oder flächenhaft erfolgt.

10. Verfahren nach Anspruch 8 oder 9,
**dadurch gekennzeichnet, dass**
der Hochenergiestrahl ein Laser- oder Elektronenstrahl ist.

11. Verfahren nach Anspruch 7,
**dadurch gekennzeichnet, dass**
das freiformendes Verfahren ein Hochgeschwindigkeits-Flammspritzverfahren oder ein Kaltgasspritzverfahren ist und während der Herstellung der Randzone (14) in vorbestimmten Bauteilschichten der Dichtung (10) die Variation, insbesondere die Verringerung des Energieeintrags durch eine Verringerung einer Partikelgeschwindigkeit eines pulverförmigen Werkstoffs zur Ausbildung der Bauteilschicht und/oder die Unterbrechung des Partikelauftrags zur Ausbildung der Schwächungsbereiche (16) erfolgt.

12. Verfahren nach Anspruch 7,
**dadurch gekennzeichnet, dass**
das freiformendes Verfahren ein Auftragsschweißverfahren, insbesondere ein Laser-Pulver-Auftragsschweißverfahren oder Elektronenstrahlschweißverfahren ist.

13. Strömungsmaschine, insbesondere Gasturbine, mit mindestens einer Dichtung (10) gemäß einem der Ansprüche 1 bis 6.

## Claims

1. Seal for sealing a gap between a stationary component and a moving component, in particular for sealing a radial gap between a rotor and a stator of a turbomachine, comprising at least one sealing segment (12) which has an edge zone (14) facing the gap, the seal (10) being produced in layers by means of a free-forming method, in particular a rapid or additive manufacturing method, a large number of predefined weakening regions (16) being formed in the edge zone (14) of the sealing segment (12), **characterized in that** the edge zone (14) is an inlet region of the sealing segment (12) and **in that** the weakening regions (16) are designed to be discontinuous in honeycomb walls (24) of the sealing segment (12).

2. Seal according to claim 1, **characterized in that** the weakening regions (16) are arranged in one or more planes (18) which extend approximately in parallel with an edge (22) of the sealing segment (12), which edge faces the gap.

3. Seal according to either of the preceding claims, **characterized in that** the large number of weakening regions (16) form a weakening zone (20), the weakening zone (20) being designed in such a way that a uniform and/or non-uniform weakening of the edge zone (14) results in axial and/or radial extension of the sealing segment (12) and/or the seal (10).

4. Seal according to any of the preceding claims, **characterized in that** the weakening regions (16) are linear and/or point-like and/or circular and/or arc-shaped.

5. Seal according to any of the preceding claims, **characterized in that** the radial spacing between the weakening regions (16) corresponds to at least the thickness of a component layer of the seal (10).

6. Seal according to any of the preceding claims, **characterized in that** the shape and/or the size and/or the length and/or the frequency of the weakening regions (16) in the edge zone (14) is constant or variable.

7. Method for producing a seal for sealing a gap between a stationary component and a moving component, in particular for sealing a radial gap between a rotor and a stator of a turbomachine, the seal (10) comprising at least one sealing segment (12) which has an edge zone (14) facing the gap, and the seal (10) being produced in layers by means of a free-forming method, in particular a rapid or additive manufacturing method, **characterized in that**, during the production of the edge zone (14), a large number of weakening regions (16) are formed by a variation, in particular a reduction and/or an interruption of a thermal and/or kinetic energy input into at least one material layer, in order to form a component layer of the seal (10), the edge zone (14) being an inlet region of the sealing segment (12).

8. Method according to claim 7, **characterized in that** the free-forming method is a rapid manufacturing method and comprises at least the following steps:
a) applying at least one powdered material in layers to at least one component platform in the region of a build-up and joining zone; and
b) fusing and/or sintering the material, in layers and locally, by supplying energy by means of at least one high-energy beam in the region of the build-up and joining zone to form a component layer of the seal (10), the variation, in particular the reduction in the energy output of the high-energy beam and/or the interruption of the high-energy beam, being carried out during the production of the edge zone (14) in predetermined component layers of the seal (10) in order to form the weakening regions (16).

9. Method according to claim 8, **characterized in that** the interruption of the high-energy beam is sequentially linear or planar.

10. Method according to either claim 8 or claim 9, **characterized in that** the high-energy beam is a laser or electron beam.

11. Method according to claim 7, **characterized in that** the free-forming method is a high-speed flame spraying method or a cold gas spraying method and, during the production of the edge zone (14) in predetermined component layers of the seal (10), the variation, in particular the reduction in the energy input, is carried out by reducing a particle speed of a powdered material in order to form the component layer and/or by the interruption of the particle application in order to form the weakening regions (16).

12. Method according to claim 7, **characterized in that** the free-forming method is a hardfacing method, in particular a laser-powder hardfacing method or electron beam welding method.

13. Turbomachine, in particular a gas turbine, having at least one seal (10) according to any of claims 1 to 6.

## Revendications

1. Joint d'étanchéité permettant d'étanchéifier une fente entre un composant fixe et un composant mobile, en particulier d'étanchéifier une fente radiale entre un rotor et un stator d'une turbomachine, comprenant au moins un segment d'étanchéité (12) comportant une zone de bord (14) orientée vers la fente, le joint d'étanchéité (10) étant produit en couches par un procédé de formation libre, en particulier un procédé générateur ou additif, une pluralité de régions d'affaiblissement (16) prédéterminées étant conçues dans la zone de bord (14) du segment d'étanchéité (12), **caractérisé en ce que** la zone de bord (14) est une région d'entrée du segment d'étanchéité (12) et **en ce que** les régions d'affaiblissement (16) sont formées de manière discontinue dans les parois d'alvéoles (24) du segment d'étanchéité (12).

2. Joint d'étanchéité selon la revendication 1, **caractérisé en ce que** les régions d'affaiblissement (16) sont disposées dans un ou plusieurs plans (18) qui s'étendent approximativement de manière parallèle à un bord (22) du segment d'étanchéité (12) orienté vers la fente.

3. Joint d'étanchéité selon l'une des revendications précédentes, **caractérisé en ce que** la pluralité de régions d'affaiblissement (16) forment une zone d'affaiblissement (20), la zone d'affaiblissement (20) étant conçue de sorte qu'un affaiblissement uniforme et/ou non uniforme de la zone de bord (14) entraîne une extension axiale et/ou radiale du segment d'étanchéité (12) et/ou du joint d'étanchéité (10).

4. Joint d'étanchéité selon l'une des revendications précédentes, **caractérisé en ce que** les régions d'affaiblissement (16) sont linéaires et/ou ponctuelles et/ou circulaires et/ou en arc de cercle.

5. Joint d'étanchéité selon l'une des revendications précédentes, **caractérisé en ce que** la distance radiale entre les régions d'affaiblissement (16) correspond au moins à l'épaisseur d'une couche de composant du joint (10).

6. Joint d'étanchéité selon l'une des revendications précédentes, **caractérisé en ce que** la forme et/ou la taille et/ou la longueur et/ou la fréquence des régions d'affaiblissement (16) dans la zone de bord (14) est constante ou variable.

7. Procédé de fabrication d'un joint d'étanchéité permettant d'étanchéifier une fente entre un composant fixe et un composant mobile, en particulier d'étanchéifier un espace radial entre un rotor et un stator d'une turbomachine, le joint d'étanchéité (10) présentant au moins un segment d'étanchéité (12) comportant une zone de bord (14) orientée vers l'espace, et le joint d'étanchéité (10) étant produit en couches par un procédé à formation libre, en particulier un procédé générateur ou additif, **caractérisé en ce que**, pendant la production de la zone de bord (14), une pluralité de régions d'affaiblissement (16) est obtenue par une variation, en particulier une réduction et/ou une interruption d'un apport d'énergie thermique et/ou cinétique dans au moins une couche de matière pour former une couche de composant du joint d'étanchéité (10), la zone de bord (14) étant une région d'entrée du segment d'étanchéité (12).

8. Procédé selon la revendication 7, **caractérisé en ce que** le procédé de formation libre est un procédé générateur et comprend au moins les étapes suivantes :
a) application par couches d'au moins une couche d'une matière pulvérulente sur au moins une plate-forme de composant dans la région d'une zone de montage et de jonction ; et
b) fusion et/ou frittage par couches et local de la matière par apport d'énergie au moyen d'au moins un faisceau à haute énergie dans la région de la zone de montage et de jonction pour former une couche de composant du joint d'étanchéité (10), la variation, en particulier la réduction de la performance énergétique du faisceau à haute énergie et/ou l'interruption du faisceau à haute énergie pour former les régions affaiblissantes (16), ayant lieu pendant la production de la zone de bord (14) dans des couches de composant prédéterminées du joint d'étanchéité (10).

9. Procédé selon la revendication 8, **caractérisé en ce que** l'interruption du faisceau à haute énergie est séquentiellement linéaire ou plane.

10. Procédé selon la revendication 8 ou 9, **caractérisé en ce que** le faisceau à haute énergie est un faisceau laser ou électronique.

11. Procédé selon la revendication 7, **caractérisé en ce que** le procédé de formation libre est un procédé de pulvérisation à la flamme à grande vitesse ou un procédé de pulvérisation de gaz froid et, pendant la production de la zone de bord (14) en couches de composant prédéterminées du joint d'étanchéité (10), la variation, en particulier la réduction de l'apport d'énergie, a lieu par une réduction d'une vitesse des particules d'une matière pulvérulente pour former la couche de composant et/ou interrompre l'application des particules afin de former les régions affaiblissantes (16).

12. Procédé selon la revendication 7, **caractérisé en ce que** le procédé de formation libre est un procédé de soudage à superposition, en particulier un procédé de soudage à superposition de poudre laser ou un procédé de soudage à faisceau d'électrons.

13. Turbomachine, en particulier turbine à gaz, comportant au moins un joint d'étanchéité (10) selon l'une des revendications 1 à 6.
